# EUROPÄISCHE PATENTSCHRIFT

(11) **EP 3 489 647 B1**
(45) Veröffentlichungstag und Bekanntmachung des Hinweises auf die Patenterteilung: **22.04.2020**
(21) Anmeldenummer: 17204170.9
(22) Anmeldetag: 28.11.2017
(51) Int. Cl.: G01L 1/22

(54) **DEHNUNGSSENSOR**
STRAIN GAUGE
CAPTEUR DE FORCE

(43) Veröffentlichungstag der Anmeldung: 29.05.2019
(73) Patentinhaber: Baumer Electric AG, 8500 Frauenfeld (CH)
(72) Erfinder: SCHNEIDER, Steffen, 78359 Orsingen-Nenzingen (DE); JÜRGENS, Alexander, 8500 Frauenfeld (CH)
(74) Vertreter: Strauss, Steffen

(56) Entgegenhaltungen:
- GB-A- 1 237 453
- US-A- 3 004 231
- US-A- 4 065 962

## Beschreibung

Die Erfindung betrifft einen Dehnungssensor mit wenigstens einem sich entlang einer Dehnungsrichtung erstreckenden, mäanderförmige Schlingen aufweisenden Dehnungskörper und mit wenigstens einem mit dem Dehnungskörper in Wirkverbindung stehenden Sensorelement zur Erfassung einer Längenänderung des Dehnungskörpers.

Dehnungssensoren dienen zum Messen der Dehnung von Objekten wie beispielsweise Maschinen oder Bauteilen. In der Regel weist ein Dehnungssensor wenigstens einen Dehnungskörper auf, welcher an dem zu messenden Objekt befestigt werden kann und welcher sich bei einer Dehnung des Objekts zumindest abschnittsweise verformt. Ein solcher Dehnungskörper steht dabei mit wenigstens einem Sensorelement, beispielsweise einem Dehnungsmessstreifen, in Wirkverbindung. Am Sensorelement kann dann ein die Dehnung repräsentierender Wert gemessen werden. Häufig ändert ein Sensorelement aufgrund einer Verformung seinen elektrischen Widerstand, welcher mit einer geeigneten Elektronik gemessen werden kann. Bei hohen auf den Dehnungssensor wirkenden Kräften, beispielsweise im Bereich von Kilonewton (kN), ist es möglich, dass sich der Dehnungskörper und/oder das Sensorelement plastisch verformen und dadurch beschädigt werden. Ebenso ist es möglich, dass die Messgenauigkeit bei zu hohen Kräften abnimmt. Hohe Kräfte können insbesondere bei der Verwendung eines Dehnungssensors an Maschinen, insbesondere an Pressen oder aber im schweren Fahrzeugbau wie beispielsweise an Baggern oder Kränen auftreten.

Die US3004231A betrifft eine Parallelbalken-Kraftmessvorrichtung mit einem elektrischen Dehnungserfassungsmittel zur Messung der Dehnung, welche in einem Balkenelement durch eine aufzubringende zu messende Kraft induziert wird. Hierzu weist die Vorrichtung einen Block mit mehreren Lochpaaren auf, die mit gefrästen Schnitten verbunden sind, so dass jeweils zwei Parallelbalken entstehen. In den mittleren zwei Bohrungen ist jeweils ein Dehnungsmeßstreifen vorgesehen. Ein weiterer Dehnungsmeßstreifen ist an einer Außenseite des Blocks vorgesehen, um Änderungen des Elastizitätsmoduls des Materials des Blocks mit Änderungen der Temperatur zu kompensieren.

Die US4065962 betrifft eine Kraftmessdose zur Ausbildung in einer Bogenstruktur mit einer Bohrung, deren Innenbereich mit vier Dehnmessstreifen belegt ist.

Die GB123453A betrifft Verbesserungen bei Antriebsriemen zur Nutzung beispielsweise als Förderbänder und deren Herstellung.

Es ist daher die Aufgabe der Erfindung, einen Dehnungssensor bereitzustellen, welcher auch bei hohen Kräften eingesetzt werden kann, ohne dass die Messgenauigkeit eingeschränkt wird.

Die erfindungsgemäße Aufgabe ist für einen Dehnungssensor der oben genannten Art dadurch gelöst, dass die kennzeichnenden Merkmale des Anspruchs 1 vorgesehen sind.

Der sich entlang einer Dehnungsrichtung erstreckende, mäanderförmige Schlingen aufweisende Dehnungskörper kann sich unter Einwirkung einer Kraft von außen verformen. Insbesondere kann sich der wenigstens eine Dehnungskörper strecken, bzw. gedehnt werden. Dadurch kann die vom sich dehnenden Objekt auf das wenigstens eine Sensorelement übertragene Kraft abgefangen bzw. abgeschwächt werden. Auf diese Weise kann verhindert werden, dass die wenigstens eine Sensoreinheit beschädigt, oder in einem Kraftbereich betrieben wird, in dem die gewünschte Messgenauigkeit nicht mehr gegeben ist. Durch die bogenförmigen Abschnitte der Schlingen kann verhindert werden, dass im Dehnungskörper Spannungsspitzen auftreten, welche zur Beschädigung des Dehnungskörpers führen könnten. Insbesondere im Vergleich zu einem Dehnungskörper mit eckigen Strukturen können so größere Kräfte durch den Dehnungskörper aufgenommen werden. Der erfindungsgemäße Dehnungssensor ist dadurch insbesondere zur Verwendung an Objekten geeignet, bei denen große Kräfte auftreten.

Die erfindungsgemäße Lösung kann durch verschiedene, jeweils für sich vorteilhafte, beliebig miteinander kombinierbare Ausgestaltungen weiter verbessert werden. Auf diese Ausführungsformen und die mit ihnen verbundenen Vorteile ist im Folgenden eingegangen. Gemäß einer ersten vorteilhaften Ausführungsform kann der Dehnungssensor zur Messung von Dehnungen bei Kräften im Kilonewton-Bereich, also bei Kräften von wenigstens einem Kilonewton, ausgestaltet sein. D.h., der Dehnungssensor, insbesondere der wenigstens eine Dehnungskörper, weist eine ausreichend stabile Struktur und eine entsprechende Größe auf, um bei den genannten Kräften zuverlässig zu funktionieren.

Um eine gleichmäßig mäandernde Struktur zu erhalten, befindet sich der bogenförmige Abschnitt bevorzugt im Schlingeninneren. Der bogenförmige Abschnitt kann insbesondere zumindest teilweise kreisförmig bzw. kreisabschnittsförmig sein.

Das Schlingenäußere wenigstens einer Schlinge, also die Außenseite wenigstens einer Schlinge, weist einen ebenen Abschnitt auf. Insbesondere können die ebenen Abschnitte benachbarter Schlingen miteinander fluchten. Dadurch kann eine kompakte Struktur erhalten werden.

Dass wenigstens ein Sensorelement ist auf einem ebenen Abschnitt der Außenseite angeordnet.

Das wenigstens eine Sensorelement, insbesondere der wenigstens eine Dehnungsmessstreifen, ist auf den ebenen Abschnitt der Schlingenaußenseite angebracht, vorzugsweise geklebt.

Damit die Dehnung eines Objekts gleichmäßig durch den Dehnungskörper auf das wenigstens eine Sensorelement übertragen wird, ist dieses bevorzugt entlang der Dehnungsrichtung mittig auf dem wenigstens eine Dehnungskörper angeordnet. Dabei erstreckt es sich bevorzugt über ein mittleres Drittel oder mittleres Fünftel des Dehnungskörpers.

In Bezug auf eine einzelne Schlinge ist das wenigstens ein Sensorelement ebenfalls bevorzugt mittig entlang der Dehnungsrichtung an der Schlinge angebracht.

Um eine ausreichende Dehnbarkeit des Dehnungskörpers zu gewährleisten, weist das Schlingeninnere in einem Kopf der Schlinge erfindungsgemäß eine größere lichte Weite entlang der Dehnungsrichtung auf als in einem sich an den Kopf anschließenden Hals der Schlinge. Dabei stellt der bogenförmige Abschnitt der Schlinge den Kopf dar.

Gemäß einer weiteren vorteilhaften Ausführungsform ist das Schlingeninnere bevorzugt durch den Hals der Schlinge nach außen hin geöffnet. Dadurch kann der Dehnungskörper entlang der Dehnungsrichtung auseinandergezogen werden. Die beiden den Hals der Schlinge begrenzenden Bereiche des Dehnungskörpers können sich dabei voneinander wegbewegen.

Besonders bevorzugt ist das wenigstens eine Sensorelement nur auf der Außenseite nur einer Schlinge angeordnet. Dadurch kann der Dehnungssensor einfach aufgebaut und kostengünstig herstellbar sein.

Um die Messgenauigkeit zu erhöhen kann das wenigstens eine Sensorelement in einem Bereich des Dehnungskörpers angeordnet sein, der eine im Vergleich zur unmittelbaren Umgebung des Bereichs erhöhte Verformbarkeit aufweist.

Der Bereich erhöhter Verformbarkeit kann dadurch gebildet sein, dass der Dehnungskörper in diesem Bereich eine im Vergleich zur unmittelbaren Umgebung verringerte Materialstärke, insbesondere quer zur Dehnungsrichtung, aufweist. Bevorzugt überlappt das wenigstens eine Sensorelement mit dem Bereich verringerter Materialstärke quer zur Dehnungsrichtung.

Der Bereich verringerte Materialstärke ist bevorzugt quer zur Dehnungsrichtung zwischen dem bogenförmigen Abschnitt einer Schlingeninnenseite und dem ebenen Abschnitt der Schlingenaußenseite gebildet.

Zumindest der Dehnungskörper ist wenigstens abschnittsweise durch ein subtraktives, insbesondere spanabhebendes Fertigungsverfahren gebildet. Bevorzugt ist das Schlingeninnere wenigstens im bogenförmigen Abschnitt durch ein kreisförmiges Loch, insbesondere durch eine Bohrung, gebildet. Dadurch kann der Dehnungskörper leicht herstellbar sein. Der Hals der Schlinge kann durch Aussägen gebildet sein.

Gemäß einer weiteren vorteilhaften Ausführungsform ist der wenigstens eine Dehnungskörper aus Stahl, insbesondere Vergütungsstahl, gebildet. Dadurch kann der Dehnungskörper eine hohe Zugfestigkeit bei gleichzeitiger elastischer Verformbarkeit aufweisen.

Um einen kompakten Dehnungssensor zu erhalten, kann wenigstens eine Datenverarbeitungseinheit mit dem wenigstens einen Dehnungskörper und dem wenigstens einen Sensorelement in einem gemeinsamen Innenraum des Dehnungssensors angeordnet sein.

Der gemeinsame Innenraum des Dehnungssensors ist bevorzugt nach Außen, insbesondere zum Schutz vor Staub und/oder Wasser, abgedichtet. Insbesondere kann der Dehnungssensor so abgedichtet sein, dass die Anforderung einer Norm, bevorzugt der IP69K, erfüllt ist.

Um einen abgedichteten Innenraum zu erhalten, ohne die Verformbarkeit des Dehnungssensors zu beeinträchtigen, kann sich der wenigstens eine Dehnungskörper zwischen zwei einen Innenraum des Dehnungssensors in Dehnungsrichtung begrenzende Backen erstrecken, wobei wenigstens eine den Innenraum des Dehnungssensors umgebende Hülse auf den Backen schwimmend gelagert ist.

Um den Innenraum des Dehnungssensors weiter abzudichten, kann dieser mit einem elastischen Material, insbesondere Silikon vergossen sein. Das elastische Material ist dabei insbesondere auch im Schlingeninneren angeordnet. Falls der Dehnungskörper mit Bohrungen versehen ist, können diese ebenfalls mit dem elastischen Material verfüllt sein.

Im Folgenden ist die Erfindung beispielhaft anhand einer vorteilhaften Ausführungsform mit Bezug auf die Zeichnung näher erläutert. Die bei der Ausführungsform beispielhaft dargestellte Merkmalskombination kann nach Maßgabe der obigen Ausführungen entsprechend für einen bestimmten Anwendungsfall durch weitere Merkmale ergänzt werden. Auch können, ebenfalls nach Maßgabe der obigen Ausführungen einzelne Merkmale bei der beschriebenen Ausführungsform weggelassen werden, wenn es auf die Wirkung dieses Merkmals in einem konkreten Anwendungsfall nicht ankommt.

In der Zeichnung werden für Elemente gleicher Funktion und/oder gleichen Aufbaus stets dieselben Bezugszeichen verwendet.

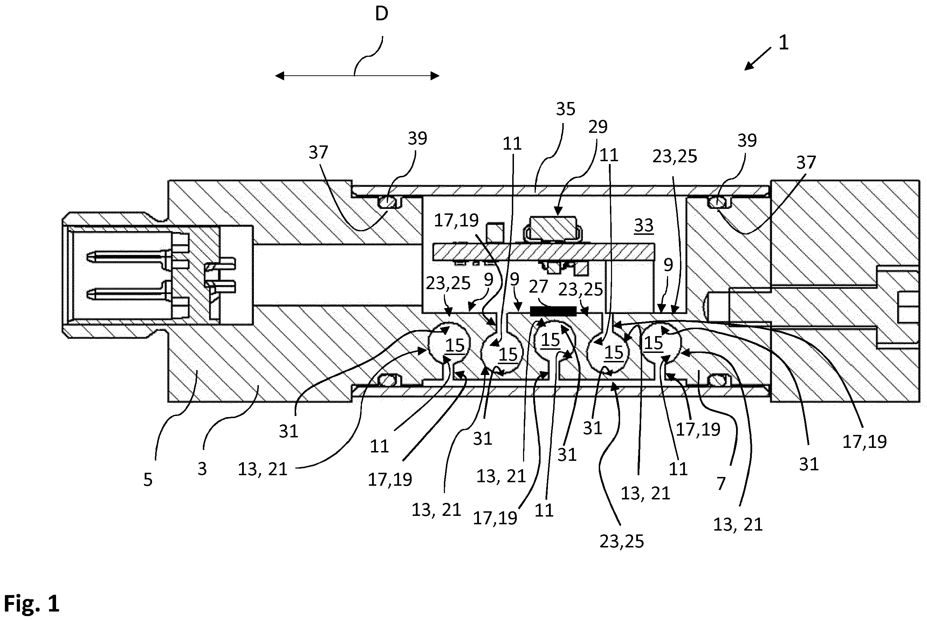

Fig. 1 zeigt eine Seitenansicht einer bevorzugten Ausführungsform eines erfindungsgemäßen Dehnungssensors 1.

Der Dehnungssensor 1 erstreckt sich im Wesentlichen entlang einer Dehnungsrichtung D. Der Dehnungssensor 1 kann an einem Objekt (nicht gezeigt) befestigt werden, dessen Dehnung entlang der Dehnungsrichtung D gemessen werden soll.

Der Dehnungssensor 1 weist einen Dehnungskörper 3 auf, welcher sich im Wesentlichen entlang der Dehnungsrichtung D erstreckt. Der Dehnungskörper 3 kann sich bei einer Dehnung des Objekts oder des Dehnungssensors 1 verformen, bzw. entlang der Dehnungsrichtung D strecken.

Der Dehnungskörper 3 ist an seinen sich in Dehnungsrichtung D gegenüberliegenden Enden mit Backen 5 und 7 verbunden. Die Backen 5 und 7 können fest mit zwei gegeneinander beweglichen Teilen des Objekts verbunden werden. Bevorzugt ist der Dehnungskörper 3 monolithisch mit den Backen 5 und 7 gebildet. Alternativ dazu kann der Dehnungskörper 3 auch an den Backen 5 und 7 angebracht sein.

Der Dehnungskörper 3 weist mäanderförmige Schlingen 9 auf, bzw. besteht aus diesen. Die Schlingen 9 sind entlang der Dehnungsrichtung D nebeneinander und in wechselseitiger Ausrichtung quer zur Dehnungsrichtung D angeordnet.

Die Schlingen 9 weisen jeweils einen bogenförmigen Abschnitt 11 auf. Im bogenförmigen Abschnitt 11 können die Schlingen 9 eine zumindest abschnittsweise kreisrunde Form aufweisen.

Die bogenförmigen Abschnitte 11, bzw. die kreisrunde Form, können jeweils einen Kopf 13 einer Schlinge 9 darstellen. Die bogenförmigen Abschnitte 11 befinden sich jeweils im Schlingeninneren 15 einer Schlinge 9.

Das Schlingeninnere 15 kommuniziert jeweils mit einem Äußeren des Dehnungskörpers 3 durch einen Spalt 17, welcher jeweils einen Hals 19 der Schlinge darstellt. Das Schlingeninnere 15 weist im Kopf 13 einer Schlinge 9 eine größere lichte Weite auf als im Hals 19. Dabei ist die lichte Weite stets parallel zur Dehnungsrichtung D gemessen.

Bevorzugt sind die bogenförmigen Abschnitte 11 bzw. die Köpfe 13 der Schlingen 9 durch kreisförmige Löcher 21 gebildet. Die kreisförmigen Löcher 21 sind bevorzugt Bohrungen 21. Die Bohrungen 21 erstrecken sich dabei quer zur Dehnungsrichtung D. Die Spalte 17 sind bevorzugt durch Aussägen oder durch ein anderes spanendes Verfahren gebildet.

Das Schlingenäußere 23 einer Schlinge 9, also die Außenseite 23 einer Schlinge 9, weist jeweils einen ebenen Abschnitt 25 auf. Bevorzugt fluchten die ebenen Abschnitte 25 benachbarter Schlingen 9 miteinander.

Der Dehnungssensor 1 weist ein Sensorelement 27 auf, welches insbesondere ein Dehnungsmessstreifen sein kann. Das Sensorelement 27 steht in Wirkverbindung mit dem Dehnungskörper 3. D.h., eine Verformung des Dehnungskörpers 3 kann durch das Sensorelement 27 gemessen werden.

Eine Verformung des Dehnungskörpers 3 kann zu einer Verformung des Sensorelements 27 führen. Diese Verformung des Sensorelements 27 kann beispielsweise einen elektrischen Widerstand im Sensorelement 27 verändern, was wiederum durch eine Datenverarbeitungseinheit 29 des Dehnungssensors 1 gemessen werden kann.

Das Sensorelement 27 ist auf dem ebenen Abschnitt 25 des Schlingenäußeren 23 einer Schlinge 9 angeordnet. Bevorzugt ist das Sensorelement 27 an dem ebenen Abschnitt 25 auf die Außenseite 23 geklebt.

Bevorzugt ist das Sensorelement 27 mit nur einer Schlinge 9 verbunden. Dies ist ausreichend um die Dehnung des Dehnungskörpers 3 zu messen. Dabei ist das Sensorelement 27 bevorzugt an einer mittig angeordneten Schlinge 9 angebracht.

Die lediglich beispielhaft dargestellte Ausführungsform des erfindungsgemäßen Dehnungssensors 1 weist insgesamt fünf Schlingen 9 auf. Das Sensorelement 27 ist folglich auf der dritten Schlinge 9 angeordnet.

In der Dehnungsrichtung D ist das Sensorelement 27 bevorzugt mittig auf der Schlinge 9 angeordnet. D.h., es liegt dem Hals 19 quer zur Dehnungsrichtung D gegenüber.

Zwischen dem Sensorelement 27 und dem Schlingeninneren 15 weist der Dehnungskörper 3 einen Bereich 31 auf, in dem die Verformbarkeit im Vergleich zur unmittelbaren Umgebung des Bereichs 31 erhöht ist. Dies wird bevorzugt durch eine in diesem Bereich 31 verringerte Materialstärke quer zur Dehnungsrichtung D erzielt.

Alternativ dazu kann die erhöhte Verformbarkeit auch durch andere Maßnahmen erreicht werden. Beispielsweise kann das Material des Dehnungskörpers 3 in dem Bereich 31 Ausnehmungen aufweisen. Ebenfalls ist es möglich, dass das Material des Dehnungskörpers 3 im Bereich 31 eine im Vergleich zur unmittelbaren Umgebung abweichende Zusammensetzung aufweist.

Bevorzugt weisen alle Schlingen 9 des Dehnungskörpers 3 solche Bereiche 31 erhöhter Verformbarkeit auf, um den Dehnungskörper 3 insgesamt elastisch verformbar zu gestalten.

Der Dehnungskörper 3 ist bevorzugt aus Stahl, besonders bevorzugt aus Vergütungsstahl gebildet.

Zwischen den Backen 5 und 7 ist bevorzugt auch die Datenverarbeitungseinheit 29 des Dehnungssensors 1 angeordnet. Dadurch lässt sich ein platzsparender Dehnungssensor 1 erhalten. Die Backen 5 und 7 begrenzen dabei einen gemeinsamen Innenraum 33 des Dehnungssensors 1. In diesem Innenraum 33 sind die Datenverarbeitungseinheit 29 und der Dehnungskörper 3 angeordnet.

Der Innenraum 33 ist bevorzugt nach außen hin abgedichtet. Insbesondere kann der Innenraum 33 einer Schutznorm entsprechend abgedichtet sein. Bevorzugt ist der Innenraum 33 gemäß der Schutznorm IP69K abgedichtet.

Um den Innenraum 33 nach außen hin abzudichten, ohne dabei die Beweglichkeit des Dehnungssensors 1 einzuschränken, weist der Dehnungssensor 1 eine Hülse 35 auf. Die Hülse 35 ist bevorzugt auf den Backen 5 und 7 schwimmend gelagert und umgibt den Innenraum 33.

Dabei weist jede der Backen 5 und 7 eine quer zur Dehnungsrichtung D umlaufende Nut 37 auf, in welcher ein Dichtungselement 39 aufgenommen ist. Die Dichtungselemente 39 können insbesondere Dichtungsringe sein. Die Hülse 35 schließt mit den Dichtungselementen 39 ab, sodass der Innenraum 33 nach Außen abgedichtet ist. Die Hülse 35 ist entlang der Dehnungsrichtung D auf den Dichtungselementen 39 beweglich.

Der Dehnungssensor 1 hat bevorzugt quer zur Dehnungsrichtung D einen kreisrunden Querschnitt. In diesem Fall ist die Hülse 35 rohrförmig. Es ist jedoch auch möglich, dass der Dehnungssensor 1 einen anderen Querschnitt aufweist. In diesem Fall ist auch die Hülse 35 entsprechend geformt.

Der Innenraum 33 ist bevorzugt mit einem elastischen Material, vorzugsweise Silikon, verfüllt. Das elastische Material ist dabei bevorzugt auch im Schlingeninneren 15 vorhanden. D.h., auch die Bohrungen 21 sind mit dem elastischen Material verfüllt.

## Patentansprüche

1. Dehnungssensor (1) mit wenigstens einem sich entlang einer Dehnungsrichtung (D) erstreckenden, mäanderförmige Schlingen (9) aufweisenden Dehnungskörper (3) und mit wenigstens einem mit dem Dehnungskörper (3) in Wirkverbindung stehenden Sensorelement (27) zur Erfassung einer Längenänderung des Dehnungskörpers (3), wobei die Schlingen (9) wenigstens einen bogenförmigen Abschnitt (11) aufweisen, **dadurch gekennzeichnet, dass**
das wenigstens eine Sensorelement (27) auf einem ebenen Abschnitt (25) einer Außenseite (23) einer Schlinge (9) angeordnet ist und das Schlingeninnere (15) in einem Kopf (13) der Schlinge (9) in der Dehnungsrichtung (D) eine größere lichte Weite aufweist als in einem sich an den Kopf (13) anschließenden Hals (19) der Schlinge (9).

2. Dehnungssensor (1) nach Anspruch 1, **dadurch gekennzeichnet, dass** sich der bogenförmige Abschnitt (11) im Schlingeninneren (15) befindet.

3. Dehnungssensor (1) nach Anspruch 2, **dadurch gekennzeichnet, dass** das Schlingeninnere (15) durch den Hals (19) der Schlinge (9) nach außen hin geöffnet ist.

4. Dehnungssensor (1) nach einem der Ansprüche 1 bis 3, **dadurch gekennzeichnet, dass** das wenigstens eine Sensorelement (27) in einem Bereich (31) des Dehnungskörpers (3) angeordnet ist, der eine im Vergleich zur unmittelbaren Umgebung des Bereichs (31) erhöhte Verformbarkeit aufweist.

5. Dehnungssensor (1) nach Anspruch 4, **dadurch gekennzeichnet, dass** der Dehnungskörper (3) im Bereich (31) erhöhter Verformbarkeit eine im Vergleich zur unmittelbaren Umgebung verringerte Materialstärke aufweist.

6. Dehnungssensor (1) nach einem der Ansprüche 1 bis 5, **dadurch gekennzeichnet, dass** das Schlingeninnere (15) wenigstens im bogenförmigen Abschnitt (11) durch ein kreisförmiges Loch (21) gebildet ist.

7. Dehnungssensor (1) nach einem der Ansprüche 1 bis 6, **dadurch gekennzeichnet, dass** der wenigstens eine Dehnungskörper (3) aus Stahl gebildet ist.

8. Dehnungssensor (1) nach einem der Ansprüche 1 bis 7, **dadurch gekennzeichnet, dass** das wenigstens eine Sensorelement (1) auf der Außenseite (23) nur einer Schlinge (9) angeordnet ist.

9. Dehnungssensor (1) nach einem der Ansprüche 1 bis 8, **dadurch gekennzeichnet, dass** wenigstens eine Datenverarbeitungseinheit (29) mit dem wenigstens einen Dehnungskörper (3) und dem wenigstens einen Sensorelement (27) in einem gemeinsamen Innenraum (33) des Dehnungssensors (1) angeordnet ist.

10. Dehnungssensor (1) nach einem der Ansprüche 1 bis 9, **dadurch gekennzeichnet, dass** ein Innenraum (33) des Dehnungssensors (1) nach Außen abgedichtet ist.

11. Dehnungssensor (1) nach einem der Ansprüche 1 bis 10, **dadurch gekennzeichnet, dass** sich der wenigstens eine Dehnungskörper (3) zwischen zwei einen Innenraum (33) des Dehnungssensors (1) in Dehnungsrichtung (D) begrenzende Backen (5, 7) erstreckt, wobei wenigstens eine den Innenraum (33) des Dehnungssensors (1) umgebende Hülse (35) auf den Backen (5, 7) schwimmend gelagert ist.

12. Dehnungssensor (1) nach einem der Ansprüche 1 bis 11, **dadurch gekennzeichnet, dass** ein Innenraum (33) des Dehnungssensors (1) mit einem elastischen Material vergossen ist.

## Claims

1. Strain gauge (1) with at least one strain body (3) stretching along a direction of strain (D) and having meandering loops (9), and with at least one sensor element (27) which is actively connected to the strain body (3) for detecting a change in length of the strain body (3), the loops (9) having at least one arch-shaped section (11), **characterized in that**
the at least one sensor element (27) is arranged on a flat section (25) at an outside (23) of a loop (9) and the inside of the loop (15) in a head (13) of the loop (9) has a larger clear span in the direction of strain (D) than in a neck (19) of the loop (9) connected to the head (13).

2. Strain gauge (1) according to claim 1, **characterized in that** the arch-shaped section (11) is located inside the loop (15).

3. Strain gauge (1) according to claim 2, **characterized in that** the inside of the loop (15) is opened to the outside through the neck (19) of the loop (9).

4. Strain gauge (1) according to one of claims 1 to 3, **characterized in that** the at least one sensor element (27) is arranged in a section (31) of the strain body (3) which has an increased deformability compared to the immediate surroundings of the section (31).

5. Strain gauge (1) according to claim 4, **characterized in that** the strain body (3) has a reduced material thickness in the section (31) of increased deformability compared to the immediate surroundings.

6. Strain gauge (1) according to one of claims 1 to 5, **characterized in that** the inside of the loop (15) is formed by a circular hole (21) at least in the arch-shaped section (11).

7. Strain gauge (1) according to one of claims 1 to 6, **characterized in that** the at least one strain body (3) is made of steel.

8. Strain gauge (1) according to one of claims 1 to 7, **characterized in that** the at least one sensor element (1) is arranged on the outside (23) of only one loop (9).

9. Strain gauge (1) according to one of claims 1 to 8, **characterized in that** at least one data processing unit (29) with the at least one strain body (3) and the at least one sensor element (27) is arranged in a mutual interior space (33) of the strain gauge (1).

10. Strain gauge (1) according to one of claims 1 to 9, **characterized in that** an interior space (33) of the strain gauge (1) is sealed to the outside.

11. Strain gauge (1) according to one of claims 1 to 10, **characterized in that** the at least one strain body (3) extends between two jaws (5, 7) delimiting an interior space (33) of the strain gauge (1) in the direction of strain (D), whereby at least one sleeve (35) surrounding the interior space (33) of the strain gauge (1) is mounted floatingly on the jaws (5, 7).

12. Strain gauge (1) according to one of claims 1 to 11, **characterized in that** an interior space (33) of the strain gauge (1) is encapsulated with an elastic material.

## Revendications

1. Capteur de contrainte (1) doté d'au moins un corps de contrainte (3) présentant des élingues (9) en forme de méandre, s'étendant le long d'un sens de contrainte (D) et d'au moins un élément de détection (27) en liaison active avec le corps de contrainte (3) pour détecter un changement de longueur du corps de contrainte (3), les élingues (9) présentant au moins une section arquée (11),
**caractérisé en ce que**
le au moins un élément de détection (27) est disposé sur une section plane (25) d'un côté extérieur (23) d'une élingue (9) et l'intérieur des élingues (15) présente une plus grande largeur intérieure dans une tête (13) de l'élingue (9) dans le sens de la contrainte (D) que dans le collet (19) de l'élingue (9) dans le prolongement de la tête (13).

2. Capteur de contrainte (1) selon la revendication 1, **caractérisé en ce que** la section arquée (11) se trouve dans la partie intérieure de l'élingue (15).

3. Capteur de contrainte (1) selon la revendication 2, **caractérisé en ce que** l'intérieur de l'élingue (15) est ouvert vers l'extérieur à travers le collet (19) de l'élingue (9).

4. Capteur de contrainte (1) selon l'une des revendications 1 à 3, **caractérisé en ce que** le au moins un élément de détection (27) est disposé dans une zone (31) du corps de contrainte (3), qui présente une aptitude à la déformation supérieure à celle de l'environnement direct de la zone (31).

5. Capteur de contrainte (1) selon la revendication 4, **caractérisé en ce que** le corps de contrainte (3) dans la zone (31) d'aptitude à la déformation supérieure présente une épaisseur de matériau réduite par rapport à l'environnement direct.

6. Capteur de contrainte (1) selon l'une des revendications 1 à 5, **caractérisé en ce que** l'intérieur de l'élingue (15) est formé par un trou circulaire (21) au moins dans la section arquée (11).

7. Capteur de contrainte (1) selon l'une des revendications 1 à 6, **caractérisé en ce que** le au moins un corps de contrainte (3) est constitué d'acier.

8. Capteur de contrainte (1) selon l'une des revendications 1 à 7, **caractérisé en ce que** le au moins élément de détection (1) est disposé sur le côté extérieur (23) d'une seule élingue (9).

9. Capteur de contrainte (1) selon l'une des revendications 1 à 8, **caractérisé en ce qu'au** moins une unité de traitement des données (29) avec le au moins un corps de contrainte (3) et le au moins un élément de détection (27) est disposé dans un espace intérieur commun (33) du capteur de contrainte (1).

10. Capteur de contrainte (1) selon l'une des revendications 1 à 9, **caractérisé en ce qu'un** espace intérieur (33) du capteur de contrainte (1) est rendu étanche vers l'extérieur.

11. Capteur de contrainte (1) selon l'une des revendications 1 à 10, **caractérisé en ce que** le au moins un corps de contrainte (3) s'étend entre deux mâchoires (5, 7) délimitant un espace intérieur (33) du capteur de contrainte (1) dans le sens de la contrainte (D), au moins un manchon (35) entourant l'espace intérieur (33) du capteur de contrainte (1) étant logé de manière flottante sur les mâchoires (5, 7).

12. Capteur de contrainte (1) selon l'une des revendications 1 à 11, **caractérisé en ce qu'un** espace intérieur (33) du capteur de contrainte (1) est scellé avec un matériau élastique.
